(19) Europäisches Patentamt / European Patent Office / Office européen des brevets

(11) EP 2 329 222 B1

# (12) EUROPÄISCHE PATENTSCHRIFT

(45) Veröffentlichungstag und Bekanntmachung des Hinweises auf die Patenterteilung:
**21.02.2018 Patentblatt 2018/08**

(21) Anmeldenummer: **09781092.3**

(22) Anmeldetag: **27.07.2009**

(51) Int Cl.:
***G01B 11/275*** *(2006.01)*

(86) Internationale Anmeldenummer:
**PCT/EP2009/059627**

(87) Internationale Veröffentlichungsnummer:
**WO 2010/031627 (25.03.2010 Gazette 2010/12)**

## (54) VERFAHREN UND MESSANORDNUNG ZUM BESTIMMEN DER RAD- ODER ACHSGEOMETRIE EINES FAHRZEUGS

METHOD AND MEASURING ASSEMBLY FOR DETERMINING THE WHEEL OR AXLE GEOMETRY OF A VEHICLE

PROCÉDÉ ET DISPOSITIF DE MESURE POUR DÉTERMINER LA GÉOMÉTRIE DE ROUES OU D'ESSIEUX D'UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.09.2008 DE 102008042145**

(43) Veröffentlichungstag der Anmeldung:
**08.06.2011 Patentblatt 2011/23**

(73) Patentinhaber: **Robert Bosch GmbH**
**70442 Stuttgart (DE)**

(72) Erfinder:
- **GRUETZMANN, Andreas**
  **70176 Stuttgart (DE)**
- **ABRAHAM, Steffen**
  **31134 Hildesheim (DE)**
- **HAJA, Andreas**
  **30453 Hannover (DE)**
- **KNOLL, Christian**
  **70376 Stuttgart (DE)**
- **MUHLE, Daniel**
  **30451 Hannover (DE)**
- **GEBHARD, Matthias**
  **70563 Stuttgart (DE)**

(56) Entgegenhaltungen:
**EP-A- 0 214 120**
**DE-A1-102006 036 671**
**US-A1- 2005 068 522**
**US-A1- 2007 124 949**
**US-A1- 2008 148 581**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 329 222 B1

## Beschreibung

Die Erfindung betrifft ein Verfahren und eine Messanordnung zum Bestimmen der Rad- oder Achsgeometrie eines Fahrzeuges, sowie das entsprechende Computerprogrammprodukt, und ein Speichermedium auf dem das Computerprogrammprodukt abgespeichert vorliegt.

### Stand der Technik

In der Vergangenheit wurden meistens optische Verfahren zur Fahrwerksvermessung eingesetzt, bei denen spezielle Messadapter mit optischen Signalisierungen oder Markierungen an dem jeweiligen Fahrzeugrad befestigt werden mussten und anschließend bildtechnisch ausgewertet werden. In der DE 197 57 760 sind beispielsweise entsprechende Verfahren offenbart. Da das Anmontieren entsprechender Hilfsmittel an dem Fahrzeug oder der Karosse zeitaufwendig ist, wurden weitere Messverfahren entwickelt, die ohne Anbauten oder Modifikationen am Fahrzeug eine Vermessung ermöglichen.

In der EP 280941 werden beispielsweise Laserlinien auf ein Rad projiziert, welches lokal in einem Rollensatz gedreht wird. Das dort ausgeführte Auswerteverfahren für die erhaltenen Messwerte erfordert explizit, dass das Rad nur lokal dreht. Eine strukturierte Beleuchtung in Form von Lichtpunkten oder Lichtstreifen und eine anschließende Auswertung der erhaltenen Bilddaten ist auch in der EP 1 505 367 A2 und auch der DE 10 2006 048 725.7 erläutert.

Konventionelle Verfahren zur Achsvermessung müssen nachteilig entweder am Fahrzeug angebrachte Merkmale verwenden, die dynamisch über eine Bildsequenz verfolgt werden. Dabei sind künstlich angebrachte Merkmale durch die jeweilige Werkstatt aufwendig an dem Fahrzeug anzubringen. Die bekannten Bildverarbeitungs- und Auswerteverfahren erfordern zudem häufig, dass das Rad lediglich lokal dreht und nicht etwa das Fahrzeug bewegt wird. Bei den eine Strukturprojektion verwendenden Auswerte- und Erfassungsverfahren, kann in der Regel eine Raddrehung nicht erkannt werden. Insofern wird die Bestimmung eines Felgenschlages auch bei einer Vorbeifahrt des Fahrzeuges nur mit niedriger Präzision möglich sein.

In der US2007/0124949 wird ein Verfahren zur Bestimmung der Drehachse eines Fahrzeugrades offenbart, welches mit strukturierten und unstrukturierten Licht arbeitet. Hierbei dient das strukturierte Licht zur Bestimmung eines parametrischen Oberflächenmodells und das unstrukturierte Licht zur Verfolgung von auf dem Rad vorhandener Marken, um die Bewegung des Rades zu beschreiben.

Sowohl in der US 2005/0068522 und der DE 10 2006 036 671 sind Verfahren zur Bestimmung der Radausrichtung bzw. Achsgeometrie eines Fahrzeuges gezeigt, die mit strukturierten Licht arbeiten, welches auf die Fahrzeugräder projiziert wird.

In der US2008/0148581 ist ein Verfahren zur Achsvermessung von Fahrzeugrädern gezeigt, bei dem zusätzliche Marken an den Rädern montiert werden, die zusammen mit den Fahrzeugrädern durch Kameras aufgenommen werden.

In der EP 0214120 ist ein Verfahren zum Erfassen und Position und Geometrie von Werkstückoberflächen gezeigt. Hierbei werden die Werkstückoberflächen durch aus zwei verschiedenen Betrachtungsstellen auf zwei Bildaufnehmern abgebildet und zur Bestimmung von markanten Stellen der Werkstückoberflächen ausgewertet.

### Offenbarung der Erfindung

Die Aufgaben der Erfindung werden durch die Merkmale der unabhängigen Ansprüche gelöst. Vorteilhafte Weiterbildungen ergeben sich aus den abhängigen Ansprüchen.

Somit wird ein Verfahren zum Bestimmen oder Berechnen der Achsgeometrie offenbart, bei dem ein Radbereich mit strukturiertem und mit unstrukturiertem Licht während einer Raddrehung mindestens eines Rades beleuchtet wird. Es werden mehrere Bilder des Radbereiches während des Beleuchtens zum Erstellen eines dreidimensionalen Oberflächenmodells mit Oberflächenparametern, eines Texturmodells mit Texturparametern und eines Bewegungsmodells mit Bewegungsparametern des Radbereiches erzeugt. Es erfolgt ein Berechnen von Werten für die Oberflächenparameter, die Texturparameter und die Bewegungsparameter durch eine Variationsrechnung in Abhängigkeit von den erfassten Bildern zum Minimieren einer Abweichung des dreidimensionalen Oberflächen-, Textur- und Bewegungsmodells von Bilddaten der erfassten Bilder. Weiter erfolgt ein Bestimmen einer Drehachse und/oder eines Drehzentrums des Rades in Abhängigkeit von den berechneten Werten der Bewegungsparameter.

Es wird somit mittels der strukturierten Beleuchtung, beispielsweise in Form von Lichtstreifen, Lichtpunkten oder anderen regelmäßigen Mustern quasi ein Stereobild der rollenden Räder erfasst. Dies ermöglicht die Erstellung eines Oberflächenmodells, beispielsweise durch Triangulierung oder zumindest die Erstellung einer dreidimensionalen Punktwolke. Die Texturparameter entsprechen beispielsweise zweidimensionalen Graustufenwerten, die sich bei einer Beleuchtung mit unstrukturiertem oder diffusem Licht ergeben. Durch die zusätzliche Berücksichtigung eines Bewegungsmodells ergibt sich ein besonders robustes und umfassendes dreidimensionales Modell des Rades und beispielsweise Teilen des Fahrzeuges, wie dem Kotflügel oder des Radkastens. Durch die Drehachsenbestimmung des entsprechenden Fahrzeugrades aus den Punktmessungen, also bei der strukturierten Beleuchtung während der Vorbeifahrt des Fahrzeuges, kann eine kinematische Modelllierung als Bewegungsmodell erfolgen. Die Kombination des Bewegungsmodells mit dem Oberflächenmodell und dem Texturmodell liefert ein besonders zuverlässiges, weiter verwendbares dreidimensionales Modell. Im erfinderischen Verfahren sind weiterhin die Verfahrensschritte vorgesehen: Beleuchten des Radbereiches mit strukturiertem und mit unstrukturiertem Licht bei ruhendem Rad; Erfassen mehrerer Bilder des Radbereiches während des Beleuchtens zum Erzeugen von Vermessungsbilddaten des Rades; Verändern der Werte des Bewegungsparameters bei festen Werten der Oberflächen- und Texturparameter durch eine Variationsrechnung derart, dass eine Abweichung des dreidimensionalen Oberflächen-, Textur- und Bewegungsmodells von den Vermessungsbilddaten minimal wird; und Bestimmen der Spur, des Sturzes und des Normal- und/oder Translationsvektors des Rades in Abhängigkeit von den veränderten Werten der Bewegungsparameter.

Während also zunächst ein Einmessvorgang zur Erstellung des dreidimensionalen Modells für das bewegte Rad oder Fahrzeug durchgeführt wird, erfolgt beim Einzelmessvorgang, beispielsweise bei stehendem Fahrzeug, die tatsächliche Bestimmung der Achsgeometrie. Letzteres kann erneut unter Rückgriff auf eine Variationsrechnung oder im Rahmen einer Optimierungsaufgabe erfolgen, worauf im Ergebnis entsprechende Werte für die Modellparameter ermittelt werden. Anhand der Modellparameter können dann die für die Rad- oder Achsgeometrie wesentlichen Größen abgeleitet werden.

Bei einer jeweiligen Variationsrechnung kann ein Minimieren einer Summe aus einem ersten, zweiten und dritten Term erfolgen. Der erste Term entspricht beispielsweise einem Abweichungsmaß zwischen erfassten Grauwertbilddaten und einer Projektion von dem Bewegungsmodell unterzogenen und auf das dreidimensionale Oberflächenmodell abgebildeten Texturparametern. Der zweite Term kann ein Abweichungsmaß zwischen aus den erfassten Bildern bestimmten dreidimensionalen Punktewolken und dem Bewegungsmodell unterzogenen dreidimensionalen Oberflächenparametern umfassen. Der dritte Term entspricht beispielsweise einer Norm des Bewegungsmodells, welches von einer geometrischen Transformation durch die Bewegungsparameter und den Kinematikparametern abhängt. Die Terme können ferner mit Gewichtungsfaktoren versehen werden. Die drei Terme entsprechen jeweils dem Oberflächenmodell, dem Texturmodell und dem Bewegungsmodell.

Es ist auch denkbar, unterschiedliche Räder an derselben Achse als Grundlage für die Berechnung der Werte für die Oberflächenparameter, Texturparameter und Bewegungsparameter zu verwenden. Dann ergeben sich mehr Stützstellen als bei der Berücksichtigung nur eines einzelnen Rades.

In einer Variante des Verfahrens wird ferner ein an den Radbereich angrenzender Karosseriebereich erfasst, und es wird bezüglich der Zugehörigkeit eines erfassten Bildpunktes zu dem Rad oder dem Karosseriebereich eine Segmentierung vollzogen.

Entsprechend kann die Summe bei der Variationsrechnung einen vierten Term umfassen, welcher einer Norm eines Segmentierungsterms entspricht. Der Segmentierungsterm hängt in der Regel von dem Bewegungsmodell unterzogenen und auf das dreidimensionale Oberflächenmodell abgebildeten Texturparametern sowie den dem Bewegungsmodell unterzogenen dreidimensionalen Oberflächenparametern ab. Die Segmentierung kann beispielsweise zur Bestimmung eines Höhenstandes des Fahrzeuges dienen.

Es wird ferner eine Messanordnung offenbart, die sich zur Durchführung eines entsprechenden Verfahrens zum Bestimmen einer Rad- oder Achsgeometrie eignet. Die Messanordnung hat eine Beleuchtungseinrichtung zum Beleuchten mindestens eines Radbereiches eines Fahrzeuges mit strukturiertem und mit unstrukturiertem Licht, mindestens eine Bildaufnahmeeinrichtung zum Erfassen von Bilddaten oder Vermessungsbilddaten des Radbereiches, und eine Steuer- und Auswerteeinrichtung, welche derart ausgestaltet ist, dass ein vorbeschriebenes Verfahren durchgeführt wird. Eine Messanordnung kann beispielsweise in der Werkstatt oder als Messplatz eingerichtet werden.

Die Erfindung betrifft ferner ein Computerprogrammprodukt, welches in Anspruch 14 definiert ist. Als programmgesteuerte Rechner- oder Steuereinrichtung kommt zum Beispiel ein PC oder ein Rechner einer Leitwarte zur Steuerung und Regelung der Messanordnung in Frage, auf dem entsprechende Software installiert ist. Das Computerprogrammprodukt kann beispielsweise in der Art eines Datenträgers wie zum Beispiel USB-Stick, Floppy-Disk, CD-ROM, DVD implementiert werden oder auch auf einer Servereinrichtung als herunterladbare Programmdatei implementiert sein.

Weitere Ausgestaltungen der Erfindung sind Gegenstand der Unteransprüche sowie der im Folgenden beschriebenen Ausführungsbeispiele der Erfindung.

## Kurze Beschreibung der Zeichnungen

Im Weiteren wird die Erfindung anhand von Ausführungsbeispielen unter Bezugnahme auf die beigelegten Figuren näher erläutert. Es zeigt dabei:

Fig. 1: ein Ablaufdiagramm für ein Verfahren zum Bestimmen einer Achsgeometrie;
Fig. 2: eine schematische Darstellung einer Messanordnung zum Bestimmen einer Achsgeometrie;

Fig. 3: schematische Darstellungen von unstrukturierter und strukturierter Beleuchtung;
Fig. 4: eine Abfolge von Verfahrensschritten für einen Einmessvorgang;
Fig. 5: eine Abfolge von Verfahrensschritten für einen Messvorgang;
Fig. 6: eine schematische Darstellung zur Erläuterung des Höhenstandes einer Karosserie; und
Fig. 7: eine schematische Darstellung zur Erläuterung einer Segmentierung.

In den Figuren sind gleiche oder funktionsgleiche Elemente, sofern nichts anderes angegeben ist, mit denselben Bezugszeichen versehen worden.

Ausführungsformen der Erfindung

In der Figur 1 ist ein Ablaufdiagramm für ein Verfahren zum Bestimmen einer Rad- oder Achsgeometrie eines Fahrzeuges dargestellt. Dabei beschreiben die Verfahrensschritte S1 und S2 einen Einmessvorgang zum Bestimmen eines dreidimensionalen Modells des Radbereiches eines Fahrzeuges. Die Schritte S3 und S4 bezeichnen eine Einzelmessung an dem Fahrzeug zur Bestimmung der jeweiligen Größen der Rad- oder Achsgeometrie. Im Schritt S5 wird das Ergebnis, wie beispielsweise eine Spur oder ein Sturz von Rädern angegeben.

Im Schritt S1 werden somit mehrere Einzelbilder des Radbereiches, bei beispielsweise abwechselnd strukturierter oder unstrukturierter Beleuchtung vorgenommen. Die strukturierte Beleuchtung und Aufnahme kann entweder mit einer Stereo- oder Monokamera erfolgen. Dies ermöglicht eine dreidimensionale Erfassung der Oberfläche, während die Aufnahmen bei unstrukturierter Beleuchtung, beispielsweise bei diffusem Licht, eine zweidimensionale Grauwertskala für die einzelnen Bildpunkte ergeben. Das Fahrzeug bewegt sich während des Einmessvorgangs, sodass auch die Raddrehung erfasst werden kann. Zum Beispiel kann der Einmessvorgang bei einer Vorbeifahrt des zu vermessenden Fahrzeugs an der in einer Werkstatt vorgesehenen Messanordnung geschehen.

Im Folgeschritt S2 wird ein dreidimensionales Modell für den erfassten Radbereich mit Hilfe eines Oberflächenmodells, eines Texturmodells und eines Bewegungsmodells erstellt. Die Komponenten des dreidimensionalen Modells haben dabei Oberflächenparameter, Texturparameter und Bewegungsparameter. Die entsprechenden Werte für die Parameter ergeben sich aus einer Variationsrechnung, wobei als Stützstellen die Bilddaten aus der strukturierten und der unstrukturierten Beleuchtung benutzt werden. Durch die Modellbildung im Schritt S2 können die Drehachse oder das Drehzentrum des Rades aus den Werten der Bewegungsparameter ermittelt werden.

Um anschließend im Schritt S3 eine Einzelmessung vorzunehmen, wird das Fahrzeug bei Stillstand ebenfalls strukturierter und nicht strukturierter Beleuchtung unterzogen, wobei jeweils Bildaufnahmen vorgenommen werden. Anschließend erfolgt im Schritt S4 eine Anpassung des bereits vorliegenden dreidimensionalen Modells, wobei jedoch die Bewegungsparameter variiert werden.

Aus den Bewegungsparametern lassen sich Spur-, Sturz-, Normal- und Translationsvektoren des Rades ermitteln, welche im Rad- bzw. Achsvermessungsschritt S5 ausgegeben werden.

Figur 2 zeigt eine Messanordnung, welche zur Durchführung des Verfahrens geeignet ist. Die Messanordnung 1 hat beispielsweise an den voraussichtlichen Positionen von Rädern 3, 4, 5, 6 eines Fahrzeuges 2 Beleuchtungseinrichtungen 7, 8, 9, 10 und Erfassungseinrichtungen oder Kameras 11, 12, 13, 14. In der Figur 2 ist schematisch das Fahrzeug 2 mit vier Rädern 3, 4, 5, 6 angedeutet, welches sich beispielsweise im Einmessvorgang entlang der Beleuchtung und Kameras bewegt, was durch den Pfeil B angedeutet ist. Die nach der Bewegung vorliegende Position ist mit dem Bezugszeichen 2', 3', 4', 5', 6' angedeutet.

Die Beleuchtungseinrichtungen 7, 8, 9, 10 sind geeignet, strukturierte und unstrukturierte Beleuchtungen, wie Lichtstreifen, Lichtraster oder regelmäßige Lichtpunktanordnungen zu erzeugen. Die Kameras 11, 12, 13, 14 liefern entsprechende Steuer- oder Bildsignale CT an einen Steuer- und Auswerterechner 15. Derselbe koordiniert auch den Messablauf, so dass beispielsweise ein in der Figur 1 angedeuteter Verfahrensablauf durchgeführt wird.

Beim Einmessvorgang werden mehrere Einzelbilder mit abwechselnd strukturierter und unstrukturierter Beleuchtung aufgenommen. Dies dient der Erzeugung eines gemeinsamen 3D-Modells und der Bestimmung der Drehachse und des Radzentrums. Für jede folgende Einzelmessung, dem eigentlichen Vermessungsvorgang zur Ermittlung der Achs- oder Radgeometrie, erfolgt eine Aufnahme des Rades mit dem Kamerasystem wie es in der Figur 2 dargestellt ist. Die Figur 3 zeigt eine Abfolge von Beleuchtungs- bzw. Aufnahmesituation mit strukturiertem Licht (Figuren 3A und 3C) und unstrukturiertem Licht (Figuren 3B und 3D). Es sind beispielhaft Karosserieteile 17 in der Nähe des zu vermessenden Rades 3 unter der jeweiligen Beleuchtung dargestellt. Um die Bewegung des Rades 3 anzudeuten ist eine Markierung 16 eingezeichnet. Die Abfolge der Figuren 3A, 3B, 3C und 3D entspricht einem zeitlichen Verlauf T=1, 2, 3 und 4. Demgemäß bewegt sich die Markierung 16 entsprechend einer Rotation des Rades 3.

Für die Aufnahme und Ermittlung des dreidimensionalen Oberflächenmodells kann eine Stereokameraanordnung verwendet werden. Für jede strukturiert beleuchtete Einzelaufnahme zu den Zeitpunkten T=1 und T=3 werden mit einer geeigneten Segmentierung (wie z.B. einem Schwellwertverfahren) die projizierten Messpunkte, welche mit dem Bezugszeichen 18 versehen sind, aus dem Stereobildpaar vom Hintergrund getrennt. Mittels anschließender Triangulation werden dann die Messpunkte aus dem jeweiligen rechten und linken Bild der Stereokamera einander zugeordnet. Die aus der Zuordnung erhaltene Disparität bestimmt dann den Tiefenwert der Messpunkte 18, wodurch sich die dreidimensionalen Messpunkte als diskrete Oberflächenpunkte $\mathbf{S}_j$ des Messobjekts bzw. des Rades 3 ergeben. Diese Oberflächenpunkte lassen sich z.B. als dreidimensionales Oberflächennetz $\mathbf{O}(\mathbf{p}_{OM})$ darstellen.

Während der zeitlich aufeinander folgenden strukturiert beleuchteten Aufnahmen wird das Messobjekt weitergerückt (z.B. gemäß einem vorbeifahrenden KFZ, das in eine Werkstatthalle einfährt). Somit fallen die Messpunkte 18 bei späteren Zeitpunkten auf unterschiedliche Stellen der Messobjektoberfläche als im zuvor aufgenommenen Zeitpunkt. Ein Kinematikmodell kann im Falle der strukturiert beleuchteten Aufnahmen die Translation des Messobjekts bzw. des Fahrzeugs und des Rades bestimmen. Dies kann z.B. durch geeignete Zuordnungsverfahren erfolgen, bei denen die Höhenwerte aus Bildern zu unterschiedlichen Zeitpunkten einander räumlich korreliert werden.

Ausschließlich aufgrund strukturiert beleuchteter Bilder kann in der Regel kein Kinematikmodell erstellt werden, welches auch eine Rotation und eine lokale Deformation berücksichtigt. Bei letzteren Szenarien sind zusätzlich Informationen über Grauwerte notwendig.

Durch die Verarbeitung von bei unstrukturierter Beleuchtung aufgenommener Grauwertbilder (Figuren 3B und 3C) und einer Zuordnung der Grauwertinformation zu den Oberflächenpunkten $\mathbf{S}_j$, die sich aus den Aufnahmen bei strukturierter Beleuchtung ergeben (Figuren 3A und 3C), lassen sich euklidische Bewegungen $\mathbf{M}_j(\mathbf{p}_{OM})$ in einem globalen Koordinatensystem beschreiben, wobei $\mathbf{p}_{OM}$ für entsprechende Oberflächenmodellparameter steht. Die Zeit zwischen den Aufnahmen der strukturierten und unstrukturierten Beleuchtung ist vorzugsweise gering, um Verschiebungen zu vermeiden. Die jeweilige Belichtungszeit wird ferner vorzugsweise derart kurz gewählt, dass eine Verschmierung der Aufnahme nicht auftritt, sondern dass für eine anschließende Bildverarbeitung ausreichend aufgelöste und scharfe Aufnahmen vorliegen.

Es werden hier die Ausdrücke strukturierte/unstrukturierte Belichtung bzw. Aufnahmen bei strukturierte/unstrukturierter Beleuchtung synonym verwendet.

Eine kombinierte Darstellung einer strukturiert und unstrukturiert belichteten Aufnahme entspricht einer triangulierten Oberfläche mit der darauf gemappten bzw. abgebildeten Textur. Eine entsprechende Darstellung ist z.B. unter der bekannten Software OpenGL für nahezu jedes Betriebssystem möglich. Der zugrunde liegende OpenGL-Standard stellt dabei mehrere hundert Befehle bereit, die die Darstellung komplexer 3D-Szenen in Echtzeit erlauben und direkt durch eine Grafikkarte des verwendeten Rechners ausgeführt werden. Insofern sind entsprechende Berechnungen effizient und schnell durchführbar.

Moderne Grafikkarten, welche beispielsweise in dem Auswerterechner 15 der Figur 2 zum Einsatz kommen können, sind mit Bild- und Texturspeicher ausgestattet, Bilder können dabei als Bitmap im Speicher der Grafikkarte abgelegt werden. Für die Transformation bzw. Abbildung der erfassten Textur auf die ermittelten Oberflächenpunkte stehen beispielsweise unter dem Quasistandard OpenGL geeignete Befehle zur Verfügung. Es können somit digitale Farbbilder mit 3D Höheninformationen fusioniert werden um eine virtuelle Darstellung einer realen Szene zu erzeugen. Diese Mechanismen werden vorzugsweise zum Erstellen des dreidimensionalen Modells für den Radbereich des zu prüfenden Fahrzeugs ausgenutzt. Aus der virtuellen (mathematischen) Darstellung können dann im Einzelmessvorgang, der weiter unten noch näher erläutert wird, achs- oder radgeometrische Werte, wie Sturz oder Spur, abgeleitet werden.

Ermittelte Oberflächenpunkte, die sich mit dem verwendeten Kinematikmodell K in der erfassten Bildsequenz über eine Rotation beschreiben lassen, werden als Oberflächenpunkte des Rades erkannt bzw. festgelegt. Entsprechend lassen sich die Oberflächenpunkte auf den Karosserieteilen, wie Kotflügel oder Radhaus, auch durch das kinematische Bewegungsmodell beschreiben. Da im Allgemeinen bei einer berührungslosen Messung, also ausschließlich mittels einer Bilderfassung, verhältnismäßig wenig Grauwertmerkmale auf der Karosse zur Verfügung stehen, können diese Oberflächenpunkte für die Bestimmung der vorliegenden Translation beim Einmessvorgang zusätzlich herangezogen. In einer Optimierung über die gesamte Bildsequenz, wie es in Bezug auf die Abläufe in der Figur 4 näher erläutert ist, werden die Oberflächenpunkte auf dem Rad durch ein 3D-Oberflächenmodell gefittet. Als 3D-Modell können z.B. eine Dreiecksvermaschung, ein Polynom oder B-Splines eingesetzt werden. Je mehr Aufnahmen durch den Einmessvorgang (Schritte S1 und S2 in Figur 1) bereitgestellt werden, desto besser werden die Oberflächenpunkte bei der Optimierung durch das Modell angenähert. Der Normalenvektor des Rades bei der Einmessung liefert dann einen Messwert zur Bestimmung des Felgenschlags, wie es zum Beispiel in der DE 102006048725.7. erläutert ist. Mit dem Einmessvorgang ist die Bestimmung des Felgenschlags eines Rades abgeschlossen, welcher für eine präzise Ermittlung der Spur- und Sturzwerte mittels einer anschließenden Einzelmessung notwendig ist.

Anstelle der oben erwähnten Stereokamera kann auch eine Monokameraanordnung zum Einsatz kommen. Im Wesentlichen erfolgt der Einmessvorgang für ein Einkamerasystem mit entsprechend kalibrierter Beleuchtung wie oben beschrieben. Der Unterschied besteht jedoch in der Kalibrierung der Lichtquelle relativ zur Kamera. Die 3D-Messpunkte $\mathbf{S}_j$ der Oberfläche zu jedem Zeitpunkt der Bildaufnahme werden über die dann bekannten Kalibrierparameter durch Triangulation errechnet. Das hierzu notwendige Verfahren ist bekannt. Wie oben beschrieben wird aus den Bildern, die ohne Strukturbeleuchtung aufgenommen werden, wiederum das 3D-Oberflächenmodell erstellt und mit Textur versehen.

In der Figur 4 sind detailliertere Verfahrensschritte für einen Einmessvorgang dargestellt. Dabei werden grundsätzlich Bildaufnahmen gemacht (Schritt T1), eine Vorverarbeitung der erhaltenen Bilddaten vorgenommen (Schritt T2) und anschließend eine Optimierung des zugrunde zulegenden dreidimensionalen Modells durchgeführt (Schritt T3). Daraus ergibt sich bereits unter Verwendung entsprechender Bewegungsparameter, bzw. der durch die Optimierung erhaltenen Werte für die Bewegungsparameter, eine vorläufige Achsgeometrie (Schritt T4).

Im Folgenden werden mögliche Implementierungen von Bewegungs- Oberflächen- und Texturmodellen als Beispiele näher erläutert. Auf der rechten Seite der Figur 4 ist in dem Kasten BL eine abwechselnde strukturierte und unstrukturierte Beleuchtung T7, T8, T9 angedeutet. Dabei verläuft eine beispielhaft angegebene Zeitachse von links nach rechts. Während der Vorbeifahrt des Fahrzeuges, wodurch sich eine Fahr- oder Rollbewegung ergibt, erfolgt die Aufnahme einer Bildsequenz mit zeitlich und/oder örtlich wechselnder strukturierter Beleuchtung und der Aufnahme von einer Eigentextur des Objektes zum Beispiel durch die in der Figur 2 dargestellten Kameras 11-14. Optional kann eine Segmentierung T9, T9', T9", wie sie weiter unten beschreiben ist, durchgeführt werden. Die bei strukturierter Beleuchtung T7, T7' erfassten Bildaufnahmen ermöglichen eine dreidimensionale Rekonstruktion des Aufnahmegegenstandes, also des jeweiligen Rades und optional zusätzlicher Teile der Karosserie. Die diffuse oder unstrukturierte Beleuchtung T8 dient der Ermittlung eines zweidimensionalen Grauwertbildes, welches zur Bestimmung der Oberflächentextur im Rahmen eines Oberflächenmodells für den Aufnahmegegenstand herangezogen wird. Zur Verbesserung des Graustufenbildes kann eine Filterung T10' vorgenommen werden.

Für den Aufbau eines entsprechenden 3D-Oberflächenmodells von Rad- und optional der Karosse kann die Radoberfläche trianguliert werden und ferner Texturinformationen zugeordnet werden. Mathematisch lassen sich die folgenden beispielhaften Elemente der dreidimensionalen Modellierung bestimmen.

Es sei $\mathbf{O}(\mathbf{p}_{OM})$ die 3D-Beschreibung des Oberflächenmodelles über die Modellparameter $\mathbf{p}_{OM}$. Für eine triangulierte Oberfläche ist $\mathbf{p}_{OM}$ zum Beispiel der jeweilige Vektor der Punktkoordinaten einer Dreiecksvermaschung im lokalen Modellkoordinatensystem des Rades bzw. der Karosserie mit $\mathbf{p}_{OM} = (x_1, y_1, z_1, \ldots x_N, y_N, z_N)$, welche auch als Oberflächenparameter des Oberflächenmodells bezeichnet werden können.

Eine parametrische Beschreibung der Textur auf dem Oberflächenmodell wird zum Beispiel durch den Vektor $\mathbf{T}(\mathbf{O}(\mathbf{p}_{OM}))$ vorgenommen. Dies kann z.B. über eine punktweise Zuordnung von Grauwertinformationen aus den durch die unstrukturierte Beleuchtung abgeleiteten Bilddaten erfolgen. Auch abgeleitete Informationen, wie Gradienten oder Kantenstrukturen, auf einem Dreieck des Oberflächenmodells können als entsprechenden Texturparameter verwendet werden.

Die Bewegung des Oberflächenmodells zum jeweiligen Bildaufnahmezeitpunkt j kann über eine geometrische Transformation $\mathbf{M}_j(\mathbf{p}_{OM})$ beschrieben werden. Dies kann z.B. als euklidische Bewegung $\mathbf{M}_j = [\mathbf{R}_j, \mathbf{t}_j]$ mit der Rotation $\mathbf{R}_j$ und der Translation $\mathbf{t}_j$ der Modellkoordinaten $\mathbf{p}_{OM} = (x_1, y_1, z_1, \ldots x_N, y_N, z_N)$ in einem globalen Koordinatensystem, z.B. in einem Bezug zur Fahrbahnebene, erfolgen. Die entsprechenden Bewegungsparameter zu allen Zeitpunkten j=1...M wird in dem Vektor $\mathbf{M} = (\mathbf{M}_1, \mathbf{M}_2, \ldots, \mathbf{M}_M)$ zusammengefasst.

Eine kinematische Modellierung K wird mit den Kinematikparametern pK vorgenommen. Diese ist in allgemeiner Form als eine Funktion mit $\mathbf{K}(\mathbf{p}_K, \mathbf{M}) = 0$ darstellbar. Eine angenommene geradlinige Bewegung der Karosse kann zum Beispiel als $\mathbf{R}_j - \mathbf{R}_{j+1} = 0;\ \forall j$ ausgedrückt werden. Es kann auch eine Bewegung des Radmodells mit einer definierten Relation zur Karosse angenommen werden.

Die 3D-Messung von Strukturpunkten oder Linien zum Zeitpunkt j wird in dem Vektor $\mathbf{S}_j$ zusammengefasst. Dies können z.B. die 3D-Koordinaten $(x_{ij}, y_{ij}, z_{ij})$ von strukturierten Punktmessungen sein, d.h. $\mathbf{S}_j = (x_{1j}, y_{1j}, z_{1j}, x_{2j}, y_{2j}, z_{2j}, \ldots)$. Ähnliche Punktwolkendarstellungen sind auch in der DE 102006048725.7 offenbart und erläutert.

Es erfolgt nun ein Optimierung der Modellparameter $\mathbf{p}_{OM}$ des 3D-Oberflächenmodells, der Texturparameter $\mathbf{T}(\mathbf{O}(\mathbf{p}_{OM}))$ und der Bewegungsparameter $\mathbf{M}_j(\mathbf{p}_{OM})$ über die Bildfolge, so dass der Fehler zwischen Messungen und Modellierungen minimal wird. Dies ist in der Figur 4 als Schritt T3 bzw. die Schritte T11-T14 angedeutet. Zur Festlegung der Werte der Bewegungs-, Kinematik-, Oberflächen-, und Texturparameter wird eine Optimierung unter Berücksichtigung des Oberflächenmodells T11, des Texturmodells T12 und des Bewegungs- und Kinematikmodells T14 vorgenommen. Um als Ergebnis das vollständige dreidimensionale Modell zu erstellen T13 ist eine Optimierungsaufgabe zu lösen:

$$(1)\quad \sum_{j=1}^{n}\left[\alpha\int_G \left\|\mathbf{P}\left(\mathbf{T}(\mathbf{M}_j(\mathbf{p}_{OM}))\right)-\mathbf{g}_j\right\|dg-\beta\int_O \left\|\mathbf{S}_j-\mathbf{O}(\mathbf{M}_j(\mathbf{p}_{OM}))\right\|do\right]-\gamma\left\|\mathbf{K}(\mathbf{p}_K,\mathbf{M})\right\|\rightarrow \min .$$

Das sich ergebende Minimierungsproblem weist folgende Anteile auf: Der erste Term stellt die Differenz zwischen der 3D-Projektion P eines texturierten 3D-Modelles in die Bildebene zum Aufnahmezeitpunkt j und den gemessenen und gegebenenfalls gefilterten Bildsignalen gj dar:

$$(2)\qquad \int_G \left|\mathbf{P}\left(\mathbf{T}(\mathbf{M}_j(\mathbf{p}_{OM}))\right)-\mathbf{g}_j\right| dg \quad .$$

Dabei ist durch Einbezug des Bewegungsmodells $\mathbf{M}_j(\mathbf{p}_{OM})$ für die Textur und die Projektion eine gute Annäherung an die zweidimensionalen Graustufenbilddaten gj erreichbar. Man kann den ersten Term als ein Abweichungsmaß zwischen erfassten Grauwertbilddaten und einer Projektion von dem Bewegungsmodell unterzogenen und auf das dreidimensionale Oberflächenmodell abgebildeten Texturparametern auffassen. Die Berechnung der Distanz oder Abweichung erfolgt über den Bildbereich G, den die Projektion P abdeckt. Ein entsprechendes Vorgehen ist z.B. in B. Rosenhahn, H. Ho und B. Klette: "Block matching based on 2D-3D pose estimation", Proc. Image and Vision Computing 2004, Seiten 309-314, 2004, Landcare Research Ltd, Akaroa, Neuseeland, näher beschrieben.

Der zweite Term in Gleichung (1) entspricht dem Abstand oder der Abweichung zwischen dem 3D-Oberflächenmodell $\mathbf{O}(\mathbf{M}_j(\mathbf{p}_{OM}))$ und den Messungen $\mathbf{S}_j$ der Strukturprojektion zum jeweiligen Zeitpunkt j und kann ausgedrückt werden als:

$$(3)\qquad \int_O \left|\mathbf{S}_j-\mathbf{O}(\mathbf{M}_j(\mathbf{p}_{OM}))\right| do \quad .$$

Die Integration erfolgt dabei über den Bereich O, der sichtbar in dem jeweiligen Bild verwendet wird.

Es werden dabei alle Messungen $\mathbf{S}_j$ der Strukturprojektion berücksichtigt. Der zweite Term kann als ein Abweichungsmaß zwischen aus den erfassten Bildern bestimmten dreidimensionalen Punktwolken und dem Bewegungsmodell unterzogenen dreidimensionalen Oberflächenparametern aufgefasst werden.

Schließlich umfasst der dritte Term die entsprechende kinematische Bewegungsmodellierung:

$$(4)\qquad \gamma\mathbf{K}(\mathbf{p}_K,\mathbf{M}),$$

der als eine Norm des Bewegungsmodells, welches von einer geometrischen Transformation durch die Bewegungsparameter und Kinematikparametern abhängt aufgefasst werden kann.

Die Gewichtungskoeffizienten $\alpha$, $\beta$ und $\gamma$ sind Faktoren zur Gewichtung der einzelnen Komponenten im Optimierungsprozess und werden zum Beispiel aus den Ergebnissen von Simulationen, bzw. Testmessungen gewählt.

Die eigentliche Optimierung der Parameter erfolgt vorzugsweise mit bekannten Verfahren der Variationsrechnung. Ein Beispiel dafür ist in Papenberg et al. "Highly accurate optic flow computation with theoretically justified warping" in Int. Journal of Computer Vision, Vol. 67, No. 2, Seiten 141-158, April 2006 beschrieben. Weitere bekannte Variationsverfahren sind in Numerical. Recipes in C/C++: the Art of Scientific Computing, Cambridge University Press 2002 erläutert. Um eine Initialisierung der jeweiligen Modellparameter vorzunehmen, kann zum Beispiel das in der DE 102006048725.7 beschriebene Verfahren eingesetzt werden.

Die Kenntnis der Werte der Bewegungsparameter M erlaubt eine Berechnung der Drehachse bzw. des Drehzentrums (Schritte T4 bzw. T15) bezogen auf das globale Koordinatensystem. Damit wird z.B. die Berechung der Fahrwerksgeometrie, wie Spur und Sturz möglich. In der DE 10 2006 035 924 A1 sind zum Beispiel entsprechende Berechungsverfahren angegeben.

Als Ergebnis des Einmessvorganges, die letztlich für nachfolgende Vermessungen bei ruhendem Fahrzeug verwendet werden, erhält man die Werte der Parameter des Modells pOM, die Werte für Oberflächentexturparameter des Modell und ferner ausgewählte Parameter des verwendeten Kinematikmodells pk, wie z.B. die Lage von Drehzentren und Drehachsen bezüglich der Modellbeschreibung.

Anstelle eines jeweiligen dreidimensionalen Modells für jeden Radbereich zu erstellen kann bei einer Variante des Einmessvorgangs auch ein gemeinsames 3D-Modell für die Räder einer Achse erstellt werden. Da in der Regel auf einer Achse dieselben Felgen und Reifen montiert sind, kann das entsprechende 3D-Modell anhand der Messdaten von beiden Rädern erstellt werden. Bei dieser Vorgehensweise stehen mehr Stützpunkte bei der Optimierung für die Erstellung des 3D-Modells zur Verfügung.

In der Figur 5 sind mögliche Verfahrensschritte für einen Einzelmessvorgang am ruhenden Fahrzeug dargestellt, nachdem im Einmessvorgang das weiter zugrunde zu legende dreidimensionale Modell bestimmt wurde. Dabei werden grundsätzlich Bildaufnahmen gemacht (Schritt T5), eine Vorverarbeitung der erhaltenen Bilddaten vorgenommen (Schritt T6) und anschließend eine weitere Optimierung auf Basis der Bildaufnahmen aus Schritt T5 des zugrunde gelegten dreidimensionalen Modells durchgeführt (Schritt T3'). Daraus ergibt sich unter Verwendung entsprechender Bewegungsparameter, bzw. der durch die Optimierung im Schritt T3' erhaltenen Werte für die Bewegungsparameter, die Achsgeometrie des Fahrzeugs (Schritt T4').

Im Folgenden wird auf die bezüglich der Figur 4 erläuterten Modellterme der Gleichung (1) hinsichtlich der Bewegungs- Oberflächen- und Texturmodelle zurück gegriffen. Auf der rechten Seite der Figur 5 ist in dem Kasten BL eine strukturierte und unstrukturierte Beleuchtung T7", T8' angedeutet. Die beiden Aufnahmen können dabei in beliebiger Reihenfolge aufgenommen werden. Bei Stillstand des Fahrzeuges erfolgt somit eine die dreidimensionale Oberfläche des Radbereichs erfassende bei strukturierter Beleuchtung vorgenommene Aufnahme und eine Aufnahme von einer Eigentextur des Objektes bei unstrukturierter Beleuchtung. Es werden beispielsweise einzelne Bilder j jeweils mit und ohne Strukturprojektion aufgenommen. Zum Beispiel werden die in der Figur 2 dargestellten Kameras 11-14 verwendet. Optional kann eine Segmentierung T9", T9''' vorgenommen werden. Die bei strukturierter Beleuchtung T7" erfasste Bildaufnahme ermöglicht, wie oben beschrieben, eine dreidimensionale Rekonstruktion des Aufnahmegegenstandes, also des jeweiligen Rades und optional zusätzlicher Teile der Karosserie. Die diffuse oder unstrukturierte Beleuchtung T8' dient der Ermittlung eines zweidimensionalen Grauwertbildes, welches zur Bestimmung der Oberflächentextur im Rahmen eines Oberflächenmodells für den Aufnahmegegenstand herangezogen wird. Zur Verbesserung des Graustufenbildes kann eine Filterung T10'''' vorgenommen werden.

Das im Einmessvorgang (vgl. Figur 4) erzeugte 3D-Modell mit den optimierten Werten für die Oberflächenparametern $\mathbf{p}_{OM}$ und die Texturparameter T($\mathbf{p}_{OM}$) wird für Einzelmessungen, z.B. zur Justage des Fahrwerkes eingesetzt.

Bei einem erneuten Optimierungsverfahren nach Gleichung (1) werden im Schritt T3' bzw. T16 und T17 nur noch die Bewegungsparameter $\mathbf{M}_j$ von Karosse und Rad verändert, so dass sich das von dem Einmessvorgang vorhandene 3D-Modell optimal in das aktuell gemessene Texturbild $\mathbf{g}_j$ und die 3D-Daten der Strukturprojektion $\mathbf{S}_j$ einpasst. Es können dabei bekannte Optimierungsverfahren und Variationsrechungen angewendete werden.

Da aus dem Einmessvorgang die Lage der Rotationsachse und des Drehzentrums in Bezug auf das Oberflächenmodell $\mathbf{p}_{OM}$ bekannt sind, erlaubt die Bestimmung der Bewegungsparameter $\mathbf{M}_j$ auch eine Transformation der Drehachsen und Drehzentren in das globale Koordinatensystem zum Beispiel der Hebebühne bzw. des Messtandes. Somit erhält man im Schritt T4' ausschließlich durch berührungsfreie Abtastung des Fahrzeugs auf effiziente Weise gewünschte Daten zur Achsgeometrie, Drehachsen und Drehzentren (Schritte T4' und T18).

Eine Variante zum Fitting eines bekannten 3D-Oberflächenmodells in ein Grauwertbild ist z.B. in B. Rosenhahn, H. Ho und B. Klette: "Block matching based on 2D-3D pose estimation", Proc. Image and Vision Computing 2004, Seiten 309-314, 2004, Landcare Research Ltd, Akaroa, Neuseeland, dargestellt. Bei dem vorgeschlagenen Verfahren wird zusätzlich neben den Texturmerkmalen auch der Abstand oder die Abweichung der 3D-Messungen $\mathbf{S}_j$ gegenüber dem Oberflächenmodell $\mathbf{O}(\mathbf{p}_{OM})$ minimiert. Für eine triangulierte Oberfläche wird hierbei der Abstand eines Messpunktes $\mathbf{S}_{ji}$ zum nächstgelegenen Dreieck, wie dies weiter oben hinsichtlich der Figur 4 erläutert wurde, ermittelt.

Bei der Einzelmessung werden aus strukturiert beleuchteten Aufnahmen die Spur- und/oder Sturzwerte als auch der jeweilige Translations- und Normalenvektor des Rades bestimmt. Der Translationsvektor beschreibt den Zusammenhang zwischen dem Rad- und dem Kamerakoordinatensystem. Die gemessenen Spur-/Sturzwerte werden dann mit dem bekannten Felgenschlag aus dem Einmessvorgang korrigiert. Daher werden die unterschiedliche Lage der Rad- und Drehachse im Raum auch berücksichtigt. Im Einmessvorgang wurde über die gesamte Bildsequenz aus Oberflächen- und Grauwertdaten ein 3D-Modell aufgebaut, welches die erhaltenen Messdaten auf der Radoberfläche optimal beschreibt. Dieses 3D-Modell wird nun für die Einzelmessungen herangezogen. Dabei kann ein Fitting des 3D-Modells durch die Messdaten mittels einer nichtlinearen Optimierung (z.B. mit einem Levenberg-Marquardt Verfahren) mit Schätzung der Lage und/oder Orientierung (Normalenvektor) erfolgen.

Falls die durch die vorbeschriebenen Schritte gemessenen Werte von Spur und Sturz außerhalb einer vorgegebenen Toleranz liegen, wird die Radaufhängung zum Beispiel entsprechend mechanisch korrigiert, bis sich die Werte in einem Sollbereich befinden. Die Vorgehensweise ist für eine Stereo- als auch Monokameraanordnung identisch.

Ergänzend zu den bei der Modellerstellung berücksichtigten Faktoren (Oberfläche, Textur und Bewegung) kann bei einer weiteren Variante des vorgestellten Verfahrens die Karosseriebewegung und Lokalisation der Radhausunterkante einbezogen werden. Beim Aufbau der 3D-Oberflächenbeschreibung der Karosserie in der Umgebung des Radausschnittes (z. B. dem Radkasten) wird dann gleichzeitig eine Segmentierung des Radlaufes vollzogen. Unter Segmentierung wird im Algemeinen die Erzeugung zusammenhängender Regionen in einem Bild gemäß einem Homogenitätskriteriums verstanden. In dem vorliegenden Anwendungsfall kann eine Segmentierung bzw. Zuordnung von Pixeln des jeweils erfassten Bildes in einen Bereich, der dem Radkasten entspricht die Vermessung der Achsgeometrie weiter verbessern.

Der Aufbau der 3D-Oberflächenbeschreibung erfolgt wiederum im Einmessvorgang in der Vorbeifahrt analog der Erläuterung zu Figur 4.. Es wird aus den Messungen der strukturierten und unstrukturierten Beleuchtung unter Einbindung der kinematischen Modellierung eine 3D-Oberflächenbeschreibung erzeugt, die zusätzlich Informationen zur Texturierung auf der Oberfläche enthält. Darüber hinaus wird auch die 3D-Oberfläche an der Übergangskante vom Radhaus zu dem, Rad segmentiert. Die Segmentierung des Überganges dient später zur Lokalisation des Höhenstandes des Fahrzeugs.

Eine Bestimmung des Höhenstandes ist in der Figur 6 dargestellt. Man erkennt das Rad 3 in dem Radkasten bzw. der Karosserie 17. Die Radhausoberkante ist mit 19 bezeichnet. Der Abstand zwischen der Radhausoberkante 19 und dem Mittelpunkt des Rades 3 kann als Höhenstand h des Fahrzeugs bezeichnet werden. Der Höhenstand, kann zum Beispiel für die Einstellung des Fahrwerks, verwendet werden. Es kann dabei der Einfederungszustand des Fahrzeugs ermittelt werden und gegebenenfalls eine einfederungsabhängige Korrektur der Sollwerte für Spur- und/oder Sturzeinstellung vorgenommen werden.

Die Segmentierung in Rad und Radhaus erfolgt mittels einer Kombination der zweidimensionalen Bildinformationen der Grauwerte und der dreidimensionalen Tiefeninformationen aus der strukturierten Beleuchtung. Die globale Optimierungsfunktion ergibt sich entsprechend der allgemeinen Formulierung nach Gleichung (1), wobei ein vierter Term als Segmentierungsterm addiert wird:

$$\sum_{j=1}^{n}\left[\alpha\int_{Z}\left|\mathbf{P}(\mathbf{T}(\mathbf{M}_j(\mathbf{p}_{OM})))-\mathbf{g}_j\right|dz-\beta\int_{Z}\left|\mathbf{S}_j-\mathbf{M}_j(\mathbf{p}_{OM})\right|dz\right]+\gamma\mathbf{K}(\mathbf{p}_K,\mathbf{M})+$$

$$+\eta\int_{O}\left|\mathbf{Z}(\mathbf{M}_j(\mathbf{p}_{OM}),\mathbf{T}(\mathbf{M}_j(\mathbf{p}_{OM})))\right|do\rightarrow\min \qquad (5)$$

Dabei beschreibt der Segmentierungsterm

$$\eta\int_{O}\left|\mathbf{Z}(\mathbf{M}_j(\mathbf{p}_{OM}),\mathbf{T}(\mathbf{M}_j(\mathbf{p}_{OM})))\right|do \qquad (6)$$

die Kosten für die Segmentierung der Zugehörigkeitsfunktion. Es kann z.B. eine Snake-Funktion, wie in T. F. Chan und L.A. Vese: "Active Contours Without Edges" in IEEE Transactions on Image Processing, Vo.10, No. 2, Seiten 266-277 beschrieben, oder ein Level-Set-Verfahren gemäß J.A. Sethian: "Level Set Methods and Fast Marching Methods: Evolving Interfaces in Computational Geometry, Fluid Mechanics, Computer Vision and Material Science", Cambridge University Press 1999 eingesetzt werden. Das jeweilige sich ergebende Energiefunktional für die Segmentierung ist durch den Term $Z_j(\mathbf{M}_j(\mathbf{p}_{OM}, \mathbf{T}(\mathbf{M}_j(\mathbf{p}_{OM})))$ symbolisch dargestellt.

In der Figur 7 sind schematisch die Anteile der dreidimensionalen Modellierung illustriert. Es sind jeweils das als Bild aufgenommene Rad 3 und der Radkasten 17 dargestellt. In der Figur 7C ist ferner die Radhausoberkante 19 markiert. In der Figur 7A ist - einem Tiefenbild $\mathbf{O}(\mathbf{p}_{OM})$, das die Oberfläche der Karosse und des Rades bezogen auf ein lokales Koordinatensystem z.B. über finite Elemente beschreibt. In der Figur 7B ist ein Bild der Textur $\mathbf{T}(x, y)$ mit radiometrischen Parametern (z.B. Grauwerten) angedeutet. Und in der Figur 7C ist ein Segmentierungsbild $\mathbf{L}(x, y)$, dass die Zugehörigkeit der jeweiligen Komponenten des Tiefen- und des radiometrischen Bildes zur Karosse beschreibt. Die Zugehörigkeitsfunktion legt beispielsweise fest, dass alle Koordinaten x,y mit L(x,y)>0 zur Karosse zugehörig sind. Vorzugsweise wird die Karosserieoberfläche dabei bis zum Beginn des Radausschnittes, also bis zur Kante des Radkastens, durch eine Fläche mit begrenzter Krümmung modelliert. Die Integration über den Bereich Z ist damit eine Integration über alle Element mit L(x,y)>0.

Eine Initialisierung des Oberflächenmodells kann z.B. als 3D-Ebene senkrecht zur Fahrbahn und mit einer gleichmäßigen Verteilung der radiometrischen Werte (z. B. von Grauwerten) erfolgen. Die Radhausoberkante 19 kann dann aus der Grenze der Segmentierung abgeleitet werden.

Bei den erläuterten Verfahren zur Messdatenerfassung und Auswertung derselben können einfach und zuverlässig Achsgeometrien von Fahrzeugen bestimmt werden. Die Aufnahme einer zeitlichen Bildfolge bei einer Fahrt- oder Rollbewegung des Fahrzeuges umfasst dabei die Erfassung jeweiliger Radausschnitte des Fahrzeuges mit jeweils einem Bildaufnahmesensor, wie einer geeigneten Kamera. Es wird zusätzlich eine strukturierte Beleuchtung auf die Szene aufgebracht. Es erfolgt zunächst eine dynamische Messung in der Vorbeifahrt des Fahrzeuges. Aus den ermittelten Daten wird eine dreidimensionale Modellbeschreibung des Rades und/oder der Karosse, die das Rad umgibt erzeugt. Bei der dreidimensionalen Modellbeschreibung werden 3D-Messungen mithilfe der Strukturprojektion bzw. strukturierten Beleuchtung, 2D-Bildmessungen mit Merkmalen, die am Messobjekt (Rad+Karosse) vorhanden und mit dem Messobjekt fest verbunden sind und eine kinematischen oder kinetische Modellierung zwischen Rad- und Karosse und zur Fahrzeugbewegung berücksichtigt. Die Werte für die Parameter der kinematischen Modellierung, z.B. die Drehachsen und die Drehzentren des Rades oder der Räder, werden für die Bestimmung der Achsgeometrie verwendet.

Darüber hinaus können die ermittelten Modellparameter für weitere Messaufgaben, wie zum Beispiel eine Prüfung von Stoßdämpfern, Gelenkspieltester oder Karosserievermessung verwendet werden. Ferner kann eine Bestimmung der Radhausunterkante aus der 3D-Modellbeschreibung erfolgen, wenn zum Beispiel eine Segmentierung mittels der erfassten Grauwerte und der 3-D-Messungen vorgenommen wird. Damit wird die Messung des Höhenstandes ermöglicht, was von einigen Fahrzeugherstellern zur Korrektur auf vorgegebene Sollwerte gewünscht sein kann. Es sind keine speziellen Targets oder optische Messmarken an Rad- und Karosse notwendig. Es ergibt sich eine hohe Robustheit bei der Erfassung der Radbewegung und der Karosseriebewegung durch den Aufbau eines 3D-Modelles unter Einbeziehung mehrerer Messarten. Einerseits wird eine strukturierte Beleuchtung, um zum Beispiel mittels einer Stereokamera dreidimensionale Punktwolken für die Rad- oder Karosserieoberfläche zu erzeugen.

Andererseits wird durch ein Graustufenbild des Radbereiches eine Radtextur erfasst. Als Bewegungsmodell kann eine kinematische/kinetische Modellierung vorgenommen werden.

## Patentansprüche

1. Verfahren zum Bestimmen einer Rad- oder Achsgeometrie eines Fahrzeugs (2) umfassend:

   Beleuchten eines Radbereichs mit strukturiertem und mit unstrukturiertem Licht während einer Raddrehung mindestens eines Rades (3) ; Erfassen mehrerer Bilder des Radbereichs während des Beleuchtens zum Erstellen eines dreidimensionalen Oberflächenmodells mit Oberflächenparametern, eines Texturmodells mit Texturparametern und eines Bewegungsmodells mit Bewegungsparametern des erfassten Radbereichs, wobei aus den Bildern mit strukturierter Beleuchtung das dreidimensionale Oberflächenmodell gewonnen wird und aus den Bildern mit unstrukturierter Beleuchtung ein zweidimensionales Grauwertbild gewonnen wird, welches zur Bestimmung des Texturmodells dient, und wobei die Bewegungsparameter durch eine Zuordnung von Grauwerteinformationen der Grauwertbilder zu Oberflächenpunkten des Oberflächenmodells gewonnen werden,

   Berechnen von Werten für die Oberflächenparameter, die Texturparameter und die Bewegungsparameter durch eine Variationsrechnung in Abhängigkeit von den erfassten Bildern zum Minimieren einer Abweichung des dreidimensionalen Oberflächen-, Textur- und Bewegungsmodells von Bilddaten der erfassten Bilder; und

   Bestimmen einer Drehachse und /oder eines Drehzentrums des Rades (3) in Abhängigkeit von den berechneten Werten der Bewegungsparameter, wobei das Verfahren ferner umfasst:

      Beleuchten des Radbereichs mit strukturiertem und mit unstrukturiertem Licht bei ruhendem Rad (3);

      Erfassen mehrerer Bilder des Radbereichs während des Beleuchtens zum Erzeugen von Vermessungsbilddaten des Rades (3);

      Verändern der Werte der Bewegungsparameter bei festen Werten der Oberflächen- und Texturparameter durch eine Variationsrechnung derart, dass eine Abweichung des dreidimensionalen Oberflächen-, Textur- und Bewegungsmodells von den Vermessungsbilddaten minimal wird; und

      Bestimmen des Spur-, Sturz-, Normalen- und Translationsvektors des Rades in Abhängigkeit von den veränderten Werten der Bewegungsparameter.

2. Verfahren nach Anspruch 1 , wobei die Bilder des Radbereichs während des Beleuchtens mit strukturiertem Licht zum Bestimmen dreidimensionaler Punktwolken mittels Triangulation als Bilddaten oder der Vermessungsbilddaten von einer Stereokamera erfasst werden.

3. Verfahren nach einem der Ansprüche 1 - 2, wobei die Bilder des Radbereichs während des Beleuchtens mit unstrukturiertem Licht zum Bestimmen zweidimensionalen Grauwertbilder als Bilddaten oder Vermessungsbilddaten erfasst werden.

4. Verfahren nach einem der Ansprüche 1 - 3, wobei das strukturierte Licht ein regelmäßiges Lichtmuster, insbesondere Lichtpunkte (18) oder Lichtstreifen, umfasst.

5. Verfahren nach einem der Ansprüche 1 - 4, wobei aus der Drehachse und dem Drehzentrum ein Felgenschlag des Rades (3) ermittelt wird.

6. Verfahren nach einem der Ansprüche 1-5, wobei das Verfahren folgenden weiteren Schritt umfasst:

Berechnen von Werten für die Oberflächenparameter, die Texturparameter und die Bewegungsparameter durch eine Variationsrechnung in Abhängigkeit von den erfassten Bildern zum Minimieren einer Abweichung des dreidimensionalen Oberflächen-, Textur- und Bewegungsmodells von Bilddaten der erfassten Bilder.

**7.** Verfahren nach Anspruch 6, wobei die Variationsrechung umfasst: Minimieren einer Summe aus einem ersten, zweiten und dritten Term, wobei der erste Term ein Abweichungsmaß zwischen erfassten Grauwertbilddaten und einer Projektion von dem Bewegungsmodell unterzogenen und auf das dreidimensionale Oberflächenmodell abgebildeten Texturparametern umfasst, wobei der zweite Term ein Abweichungsmaß zwischen aus den erfassten Bildern bestimmten dreidimensionalen Punktwolken und dem Bewegungsmodell unterzogenen dreidimensionalen Oberflächenparametern umfasst, und wobei der dritte Term eine Norm des Bewegungsmodells, welches von einer geometrischen Transformation durch die Bewegungsparameter und Kinematikparametern abhängt, umfasst.

**8.** Verfahren nach Anspruch 7, wobei der erste, zweite und dritte Term jeweils einen Gewichtungsfaktor ($\alpha, \beta, \gamma$) aufweist.

**9.** Verfahren nach einem der Ansprüche 1 - 8, wobei das Berechnen der Werte für die Oberflächenparameter, die Texturparameter und die Bewegungsparameter unter Berücksichtigung von Bilddaten mehrerer unterschiedlicher Räder (4, 6) derselben Achse des Fahrzeugs (2) erfolgt.

**10.** Verfahren nach einem der Ansprüche 1 - 9, wobei ferner ein an den Radbereich angrenzender Karosseriebereich (17) erfasst wird und bezüglich der Zugehörigkeit eines erfassten Bildpunktes zu dem Rad (3) oder dem Karosseriebereich (17) eine Segmentierung vollzogen wird.

**11.** Verfahren nach Anspruch 7 und 10, wobei die Summe einen vierten Term aufweist, welcher einer Norm eines Segmentierungsterms, welcher von dem Bewegungsmodell unterzogenen und auf das dreidimensionale Oberflächenmodell abgebildeten Texturparametern sowie von den dem Bewegungsmodell unterzogenen dreidimensionalen Oberflächenparametern abhängt, umfasst.

**12.** Verfahren nach einem der Ansprüche 10 oder 11, wobei in Abhängigkeit von der Segmentierung eine Radhausoberkante (19) zur Bestimmung eines Höhenstandes (h) des Fahrzeugs (2) ermittelt wird.

**13.** Messanordnung (1) mit einer Beleuchtungseinrichtung (7-9) zum Beleuchten mindestens eines Radbereichs eines Fahrzeugs (2) mit strukturiertem und mit unstrukturiertem Licht, mindestens einer Bildaufnahmeeinrichtung (11-13) zum Erfassen von Bilddaten oder Vermessungsbilddaten des Radbereichs, und mit einer Steuer- und Auswerteeinrichtung (15), welche derart eingerichtet ist, dass ein Verfahren nach einem der Ansprüche 1 - 12 durchgeführt wird.

**14.** Computerprogrammprodukt, zur Durchführung eines Verfahrens nach einem der Ansprüche 1 - 12 wenn ausgeführt auf einer programmgesteuerten Steuer- und Auswerteeinrichtung (15) und einer Messanordnung (1) nach Anspruch 13.

**15.** Speichermedium, auf dem das Computerprogrammprodukt nach Anspruch 14 abgespeichert vorliegt.

## Claims

**1.** Method for determining a wheel or axle geometry of a vehicle (2), comprising:

illuminating a wheel region with structured light and with unstructured light during a wheel rotation of at least one wheel (3);
capturing a plurality of images of the wheel region during the illumination for the purpose of creating a three-dimensional surface model having surface parameters, a texture model having texture parameters and a movement model having movement parameters of the captured wheel region, wherein the three-dimensional surface model is obtained from the images with structured illumination and a two-dimensional greyscale value image is obtained from the images with unstructured illumination, said greyscale value image serving to determine the texture model, and wherein the movement parameters are obtained by assigning greyscale value information of the greyscale value images to surface points of the surface model,
calculating values for the surface parameters, the texture parameters and the movement parameters by a variational calculation depending on the captured images for the purposes of minimizing a deviation of the three-dimensional surface model, texture model and movement model from image data of the captured images; and determining an axis of rotation and/or a centre of rotation of the wheel (3) depending on the calculated values of the movement parameters, wherein the method further comprises:

illuminating the wheel region with structured light and with unstructured light when the wheel (3) is at rest; capturing a plurality of images of the wheel region during the illumination for the purpose of producing measurement image data of the wheel (3);
modifying the values of the movement parameters in the case of fixed values of the surface parameters and texture parameters by way of a variational calculation in such a way that a deviation of the three-dimensional surface model, texture model and movement model from the measurement image data is minimized; and
determining the track, camber, normal and translation vectors of the wheel depending on the modified values of the movement parameters.

**2.** Method according to Claim 1, wherein the images of the wheel region are captured as image data or the measurement image data by a stereo camera during the illumination with structured light for the purposes of determining three-dimensional point clouds by means of triangulation.

**3.** Method according to either of Claims 1 and 2, wherein the images of the wheel region are captured as image data or measurement image data during the illumination with unstructured light for the purpose of determining two-dimensional greyscale value images.

**4.** Method according to any one of Claims 1-3, wherein the structured light comprises a regular light pattern, in particular light dots (18) or light stripes.

**5.** Method according to any one of Claims 1-4, wherein a rim run-out of the wheel (3) is ascertained from the axis of rotation and the centre of rotation.

**6.** Method according to any one of Claims 1-5, wherein the method comprises the following further step:

calculating values for the surface parameters, the texture parameters and the movement parameters by a variational calculation depending on the captured images for the purpose of minimizing a deviation of the three-dimensional surface model, texture model and movement model from image data of the captured images.

**7.** Method according to Claim 6, wherein the variational calculation comprises: minimizing the sum of a first term, second term and third term, wherein the first term comprises a measure for the deviation between captured greyscale value image data and a projection of texture parameters subjected to the movement model and mapped onto the three-dimensional surface model, wherein the second term comprises a measure for the deviation between three-dimensional point clouds determined from the captured images and three-dimensional surface parameters subjected to the movement model, and wherein the third term comprises a norm of the movement model, which depends on a geometric transformation by the movement parameters and kinematic parameters.

**8.** Method according to Claim 7, wherein the first term, second term and third term each have a weighting factor ($\alpha$, $\beta$, $\gamma$).

**9.** Method according to any one of Claims 1-8, wherein the values for the surface parameters, the texture parameters and the movement parameters are calculated taking into account image data of a plurality of different wheels (4, 6) of the same axle of the vehicle (2).

**10.** Method according to any one of Claims 1-9, wherein, further, a body region (17) adjoining the wheel region is captured and a segmentation is carried out in respect of the belonging of a captured pixel to the wheel (3) or the body region (17).

**11.** Method according to Claims 7 and 10, wherein the sum has a fourth term which comprises a norm of a segmentation term which depends on texture parameters subjected to the movement model and mapped onto the three-dimensional surface model and on the three-dimensional surface parameters subjected to the movement model.

**12.** Method according to either of Claims 10 and 11, wherein a wheelhouse upper edge (19) is ascertained depending on the segmentation for the purpose of determining a vehicle level (h) of the vehicle (2).

**13.** Measurement arrangement (1) having an illumination device (7-9) for illuminating at least one wheel region of the vehicle (2) with structured light and with unstructured light, at least one image capture device (11-13) for capturing image data or measurement image data of the wheel region, and having a control and evaluation device (15) configured in such a way that a method according to any one of Claims 1-12 is carried out.

**14.** Computer program product for carrying out a method according to any one of Claims 1-12 when it is executed on a program-controlled control and evaluation device (15) and a measurement arrangement (1) according to Claim 13.

**15.** Storage medium, on which the computer program product according to Claim 14 is present in stored form.

## Revendications

**1.** Procédé destiné à déterminer la géométrie d'une roue ou d'un essieu d'un véhicule (2), comprenant les étapes consistant à :

éclairer une zone de roue avec une lumière structurée et avec une lumière non structurée pendant la rotation d'au moins une roue (3) ;
acquérir plusieurs images de la zone de roue pendant l'éclairage pour créer un modèle de surface tridimensionnel ayant des paramètres de surface, un modèle de texture ayant des paramètres de texture et un modèle de mouvement ayant des paramètres de mouvement de la zone de roue acquise,
dans lequel le modèle de surface tridimensionnel est obtenu à partir des images avec éclairage structuré et une image de niveaux de gris bidimensionnels est obtenue à partir des images avec éclairage non structuré, laquelle image sert à déterminer le modèle de texture, et
dans lequel les paramètres de mouvement sont obtenus en affectant des informations de niveaux de gris des images de niveaux de gris à des points de surface du modèle de surface,
calculer des valeurs pour les paramètres de surface, les paramètres de texture et les paramètres de mouvement au moyen d'un calcul de variation en fonction des images acquises afin de minimiser l'écart entre le modèle tridimensionnel de surface, de texture et de mouvement et les données d'images des images acquises ; et
déterminer un axe de rotation et/ou un centre de rotation de la roue (3) en fonction des valeurs calculées des paramètres de mouvement,
dans lequel le procédé consiste en outre à :

éclairer la zone de roue avec une lumière structurée et avec une lumière non structurée pendant que la roue est à l'arrêt (3) ;
acquérir plusieurs images de la surface de la zone de roue pendant l'éclairage pour générer des données d'images de mesure de la roue (3) ;
modifier les valeurs des paramètres de mouvement lorsque les valeurs des paramètres de surface et de texture sont fixes, au moyen d'un calcul de variation, de manière à ce qu'un écart entre le modèle tridimensionnel de surface, de texture et de mouvement et les données d'images de mesure soit minimal ; et
déterminer le vecteur de voie, de descente, normal et de translation de la roue en fonction des valeurs modifiées des paramètres de mouvement.

**2.** Procédé selon la revendication 1, dans lequel les images de la zone de roue sont acquises pendant l'éclairage avec une lumière structurée pour déterminer par triangulation des nuages de points tridimensionnels en tant que données d'images ou les données d'images de mesure d'une caméra stéréoscopique.

**3.** Procédé selon l'une des revendications 1 et 2, dans lequel les images de la zone de roue sont acquises en tant que données d'images ou que données d'images de mesure pendant l'éclairage avec une lumière non structurée pour déterminer des images de niveaux de gris bidimensionnelles.

**4.** Procédé selon l'une des revendications 1 à 3, dans lequel la lumière structurée comprend un motif lumineux régulier, en particulier des points lumineux (18) ou des bandes lumineuses.

**5.** Procédé selon l'une des revendications 1 à 4, dans lequel un voile de la roue (3) est déterminé à partir de l'axe de rotation et du centre de rotation.

**6.** Procédé selon l'une des revendications 1 à 5, dans lequel le procédé comprend l'étape supplémentaire consistant à :

calculer des valeurs pour les paramètres de surface, les paramètres de texture et les paramètres de mouvement au moyen d'un calcul de variation en fonction des images acquises afin de minimiser l'écart du modèle tridimensionnel de surface, de texture et de mouvement des images acquises.

**7.** Procédé selon la revendication 6, dans lequel le calcul de variation consiste à :

minimiser la somme des premier, deuxième et troisième termes, dans lequel le premier terme comprend une mesure d'écart entre des données d'images de niveaux de gris acquises et une projection de paramètres de texture soumis au modèle de mouvement et représentés sur le modèle de surface tridimensionnel, dans lequel le deuxième terme comprend une mesure d'écart entre des nuages de points tridimensionnels déterminés à partir des images acquises et des paramètres de surface tridimensionnels soumis au modèle de mouvement, et dans lequel le troisième terme comprend une norme du modèle de mouvement, laquelle norme dépend d'une transformation géométrique par l'intermédiaire des paramètres de mouvement et de paramètres cinématiques.

**8.** Procédé selon la revendication 7, dans lequel les premier, deuxième et troisième termes possèdent chacun un facteur de pondération (a, $\beta$, $\gamma$).

**9.** Procédé selon l'une des revendications 1 à 8, dans lequel le calcul des valeurs pour les paramètres de surface, les paramètres de texture et les paramètres de mouvement est effectué en tenant compte de données d'images de plusieurs roues (4, 6) différentes du même essieu du véhicule (2).

**10.** Procédé selon l'une des revendications 1 à 9, dans lequel une zone de carrosserie (17) adjacente à la zone de roue est en outre acquise et une segmentation est effectuée en rapport avec l'appartenance d'un pixel acquis à la roue (3) ou à la zone de carrosserie (17).

**11.** Procédé selon les revendications 7 et 10, dans lequel la somme comporte un quatrième terme qui comprend une norme d'un terme de segmentation dépendant de paramètres de texture soumis au modèle de mouvement et représentés sur le modèle de surface tridimensionnel et dépendant des paramètres de surface tridimensionnels soumis au modèle de mouvement.

**12.** Procédé selon l'une des revendications 10 ou 11, dans lequel un bord de passage de roue supérieur (19) est déterminé en fonction de la segmentation pour déterminer un niveau de hauteur (h) du véhicule (2).

**13.** Système de mesure (1) comportant un dispositif d'éclairage (7-9) destiné à éclairer au moins une zone de roue d'un véhicule (2) avec une lumière structurée et avec une lumière non structurée, au moins un dispositif d'acquisition d'images (11-13) destiné à acquérir des données d'images ou des données d'images de mesure de la zone de roue, et un dispositif de commande et d'évaluation (15) qui est conçu de manière à mettre en oeuvre un procédé selon l'une des revendications 1 à 12.

**14.** Produit de programme d'ordinateur pour la mise en oeuvre d'un procédé selon l'une des revendications 1 à 12 lorsqu'il est exécuté sur un dispositif de commande et d'évaluation (15) commandé par programme et sur un système de mesure (1) selon la revendication 13.

**15.** Support de stockage sur lequel est stocké le produit de programme d'ordinateur selon la revendication 14.

Fig. 1

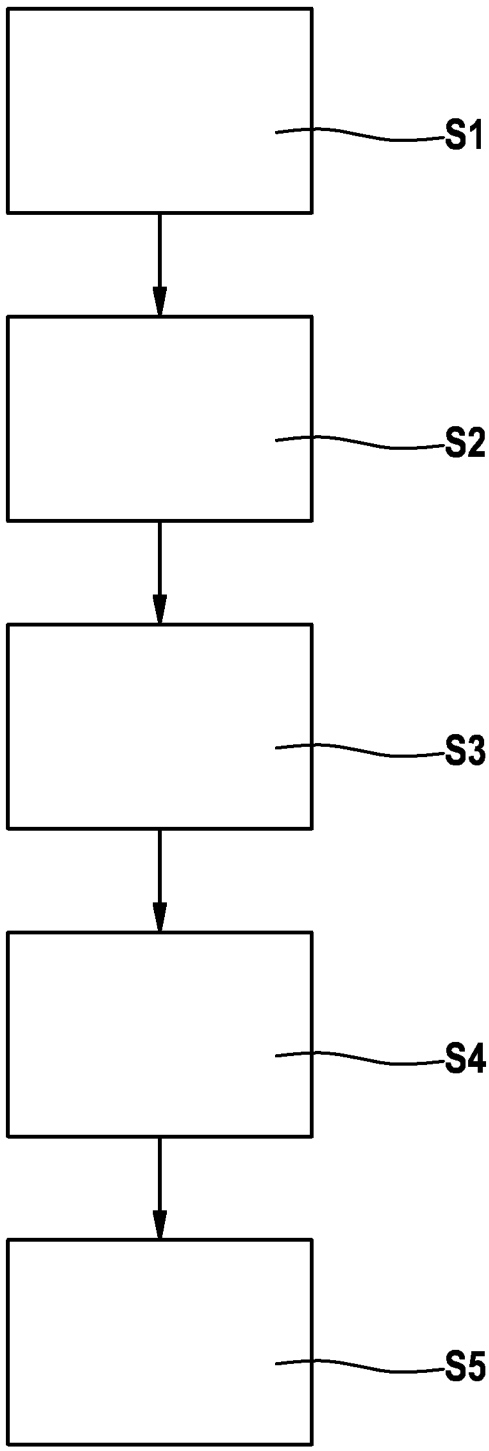

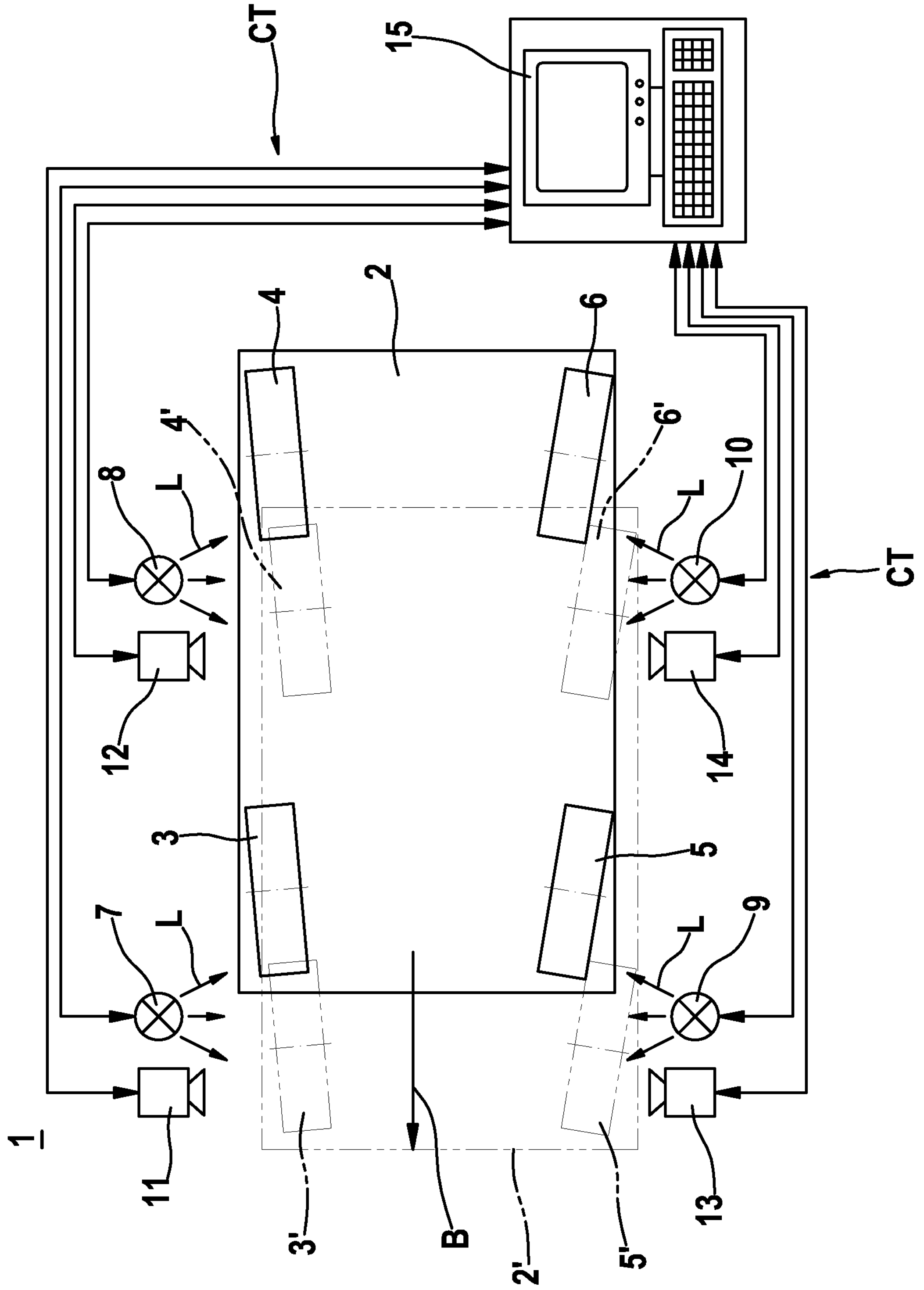


Fig. 2

Fig. 3A

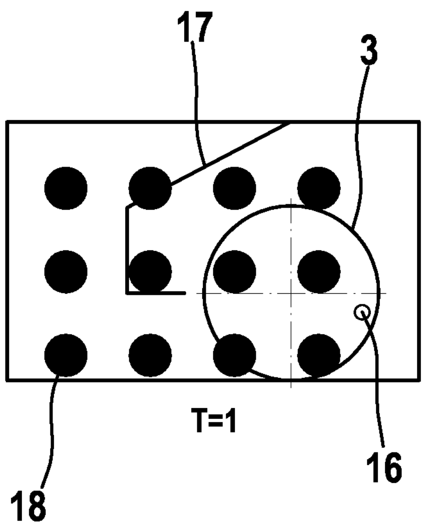


Fig. 3B

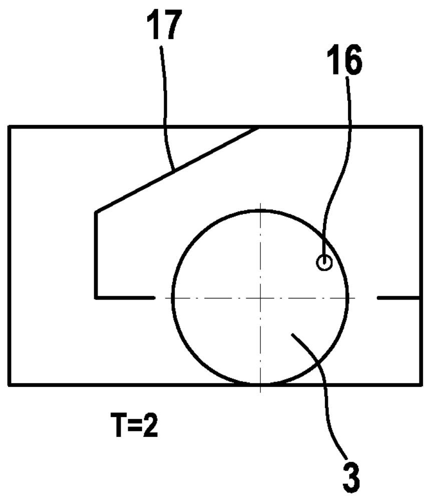


Fig. 3C

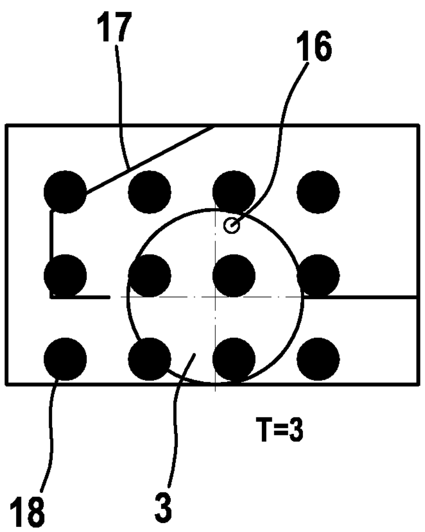


Fig. 3D

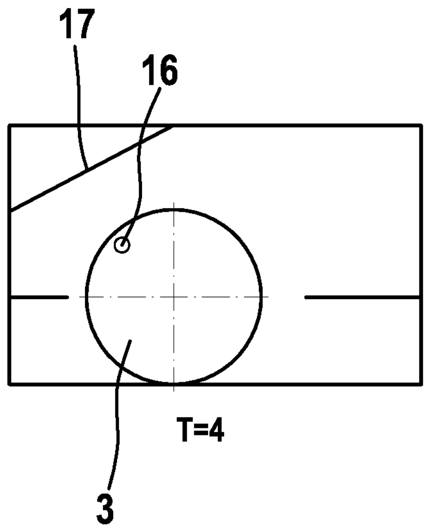

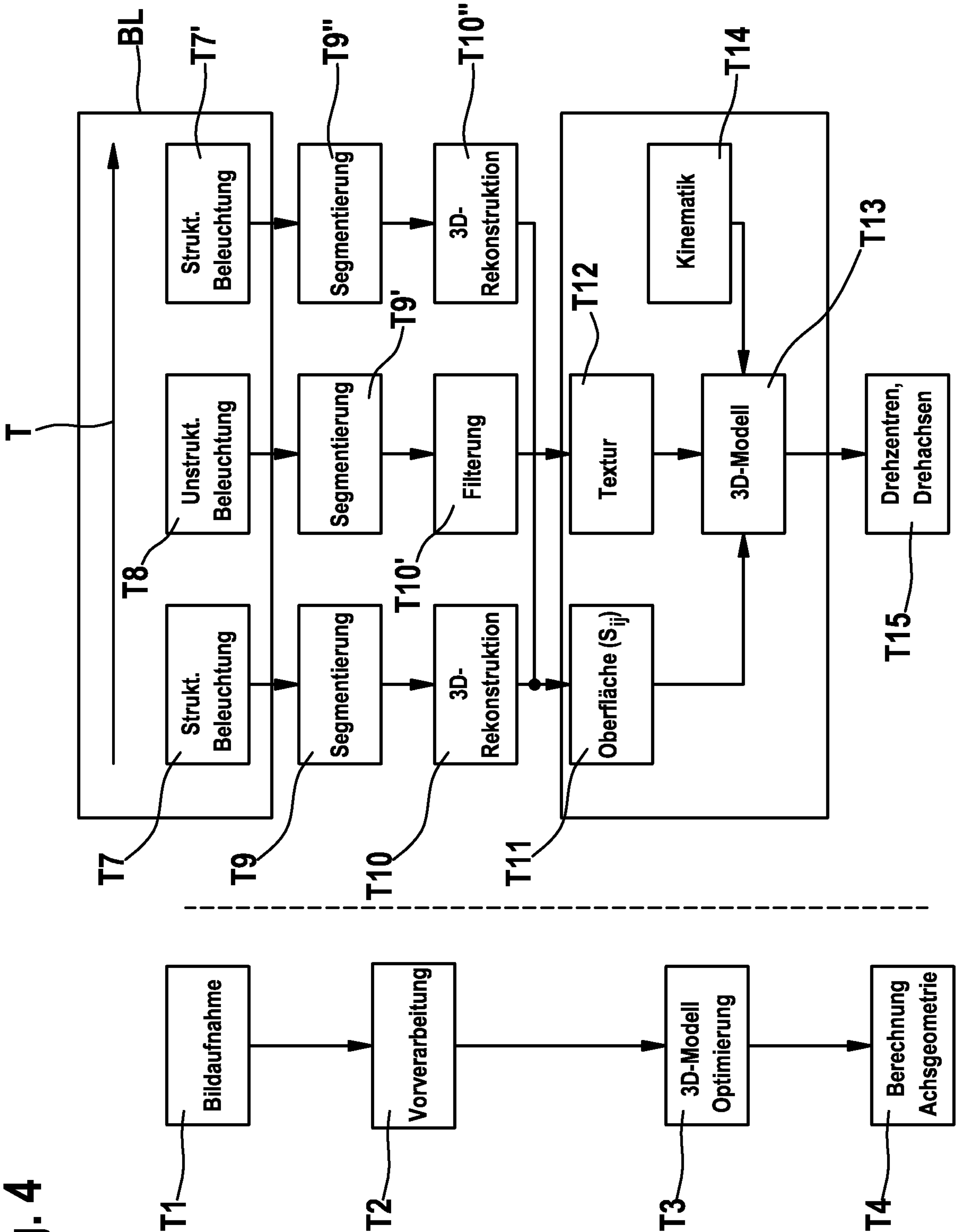
BL
T
T7
T7'
T8
T9
T9'
T9''
T10
T10'
T10''
T11
T12
T13
T14
T15
Strukt. Beleuchtung
Unstrukt. Beleuchtung
Strukt. Beleuchtung
Segmentierung
Segmentierung
Segmentierung
3D-Rekonstruktion
Filterung
3D-Rekonstruktion
Oberfläche ($S_{ij}$)
Textur
Kinematik
3D-Modell
Drehzentren, Drehachsen
T1
T2
T3
T4
Bildaufnahme
Vorverarbeitung
3D-Modell Optimierung
Berechnung Achsgeometrie

Fig. 4

Fig. 5

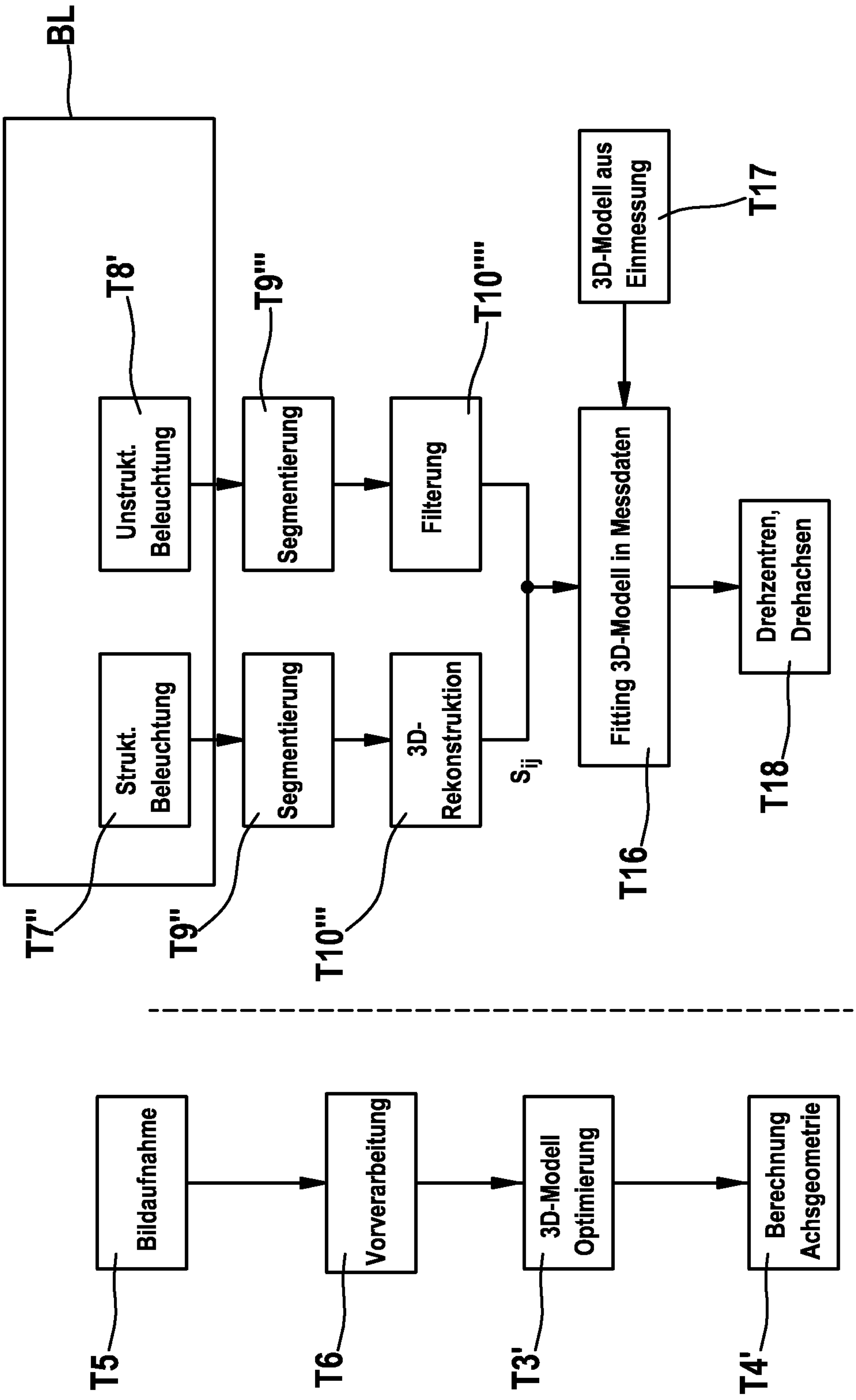
BL
Unstrukt. Beleuchtung
T8'
Strukt. Beleuchtung
T7''
Segmentierung
T9'''
Segmentierung
T9''
Filterung
T10''''
3D-Rekonstruktion
T10'''
$S_{ij}$
3D-Modell aus Einmessung
T17
Fitting 3D-Modell in Messdaten
T16
Drehzentren, Drehachsen
T18
Bildaufnahme
T5
Vorverarbeitung
T6
3D-Modell Optimierung
T3'
Berechnung Achsgeometrie
T4'

# Fig. 6

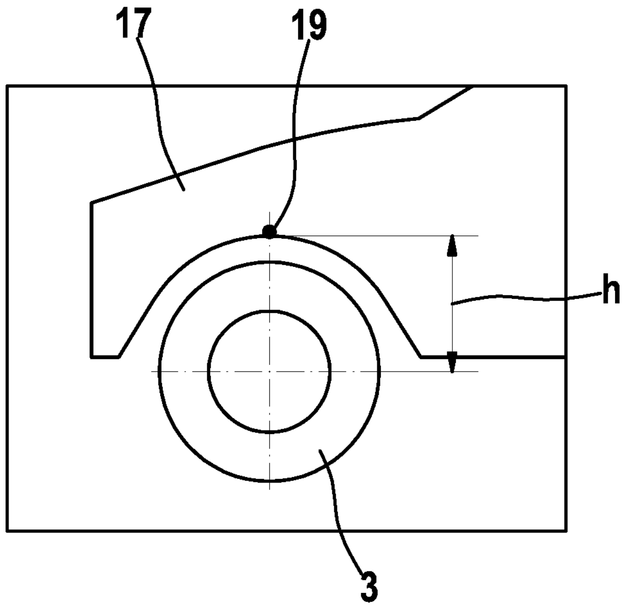

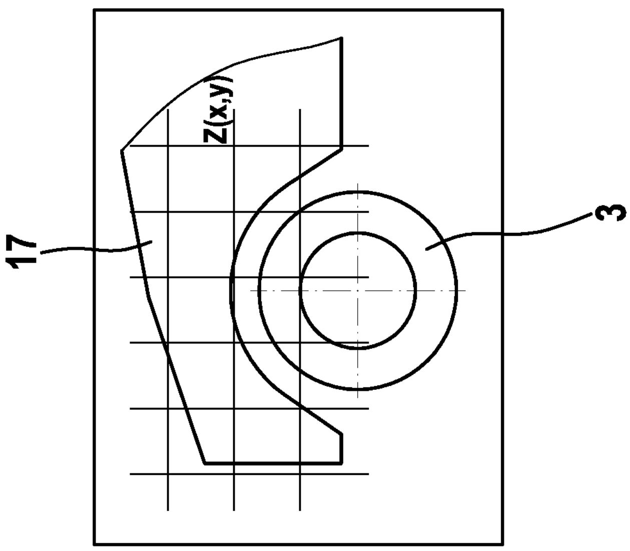


Fig. 7A

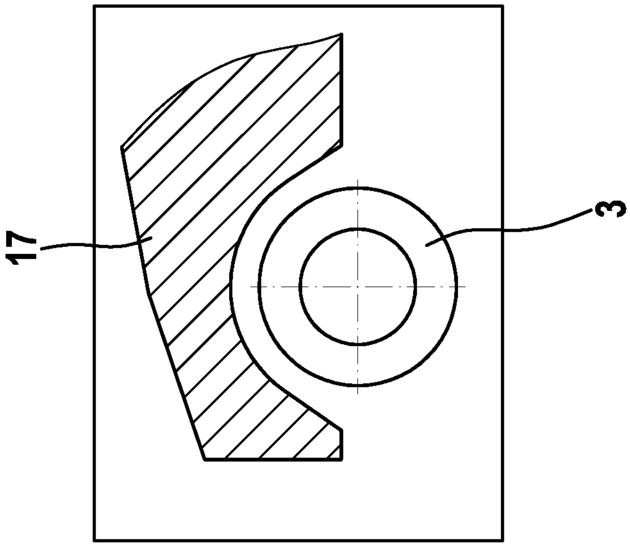


Fig. 7B

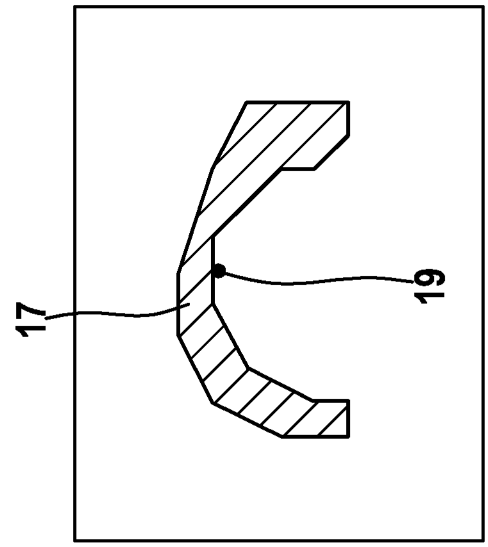


Fig. 7C

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19757760
- EP 280941 A
- EP 1505367 A2
- DE 102006048725
- US 20070124949 A
- US 20050068522 A
- DE 102006036671
- US 20080148581 A
- EP 0214120 A
- DE 102006035924 A1


### In der Beschreibung aufgeführte Nicht-Patentliteratur


- Block matching based on 2D-3D pose estimation. **B. ROSENHAHN ; H. HO ; B. KLETTE.** Proc. Image and Vision Computing. Landcare Research Ltd, 2004, 309-314
- **PAPENBERG et al.** Highly accurate optic flow computation with theoretically justified warping. *Int. Journal of Computer Vision,* April 2006, vol. 67 (2), 141-158
- Block matching based on 2D-3D pose estimation. **B. ROSENHAHN ; H. HO ; B. KLETTE.** Proc. Image and Vision Computing 2004. Landcare Research Ltd, 2004, 309-314
- **T. F. CHAN ; L.A. VESE.** Active Contours Without Edges. *IEEE Transactions on Image Processing,* vol. 10 (2), 266-277
- **J.A. SETHIAN.** Level Set Methods and Fast Marching Methods: Evolving Interfaces in Computational Geometry, Fluid Mechanics, Computer Vision and Material Science. Cambridge University Press, 1999